# EUROPÄISCHE PATENTANMELDUNG

(11) **EP 1 630 055 A1**
(43) Veröffentlichungstag der Anmeldung: **01.03.2006**
(21) Anmeldenummer: 05016040.7
(22) Anmeldetag: 23.07.2005
(51) Int. Cl.: B60W 10/02, B60W 10/18, B60W 50/02

(54) **Kraftfahrzeug mit einer Bremseinrichtung und Verfahren zum Steuern einer Bremseinrichtung**

(30) Priorität: 14.08.2004 DE 102004039500
(71) Anmelder: LuK Lamellen und Kupplungsbau Beteiligungs KG, 77815 Bühl (DE)
(72) Erfinder: Strack, Florian, 67100 Strasbourg (FR); Moosheimer, Johannes, Dr., 77815 Bühl (DE); Kneissler, Markus, 77830 Bühlertal (DE)

(57) **Zusammenfassung**

Die Erfindung betrifft ein Verfahren zum Steuern der Bremseinrichtung (24) eines Kraftfahrzeuges, welches Kraftfahrzeug aufweist: eine Bremseinrichtung (24), einen von einem Motor (12) belastbaren Antriebsstrang (10) mit einer Kupplungseinrichtung (30), ein elektronisches Kupplungssteuergerät (36) zum Ansteuern der Kupplungseinrichtung, und eine elektronisch gesteuerte Bremsüberwachungs- (26) und/oder -betätigungseinrichtung zum Überwachen und/oder Betätigen der Bremseinrichtung (24), wobei überwacht wird ob, vorbestimmte Funktionsbeeinträchtigungen des Kupplungssteuergeräts gegeben sind und/oder vom Kupplungssteuergerät detektiert oder erfasst wurden, wobei dann, wenn festgestellt wird, dass eine Funktionsbeeinträchtigung des Kupplungssteuergeräts gegeben sind und/oder wenn festgestellt wird, dass eine Funktionsbeeinträchtigung vom Kupplungssteuergerät detektiert oder erfasst wurde, die elektronisch gesteuerte Bremsüberwachungs- und/oder -betätigungseinrichtung bewirkt, dass mittels dieser elektronisch gesteuerte Bremsüberwachungs- und/oder -betätigungseinrichtung die Bremseinrichtung betätigt wird.

## Beschreibung

Die Erfindung betrifft ein Verfahren zum Steuern der Bremseinrichtung eines Kraftfahrzeuges sowie ein Kraftfahrzeug mit einer Bremseinrichtung.

Kraftfahrzeuge weisen üblicherweise einen Antriebsstrang auf, in dem häufig eine Getriebeeinrichtung angeordnet ist. Ferner weisen Kraftfahrzeuge üblicherweise einen Motor, wie Brennkraftmaschine, auf, mittels welchem der Antriebsstrang angetrieben werden kann. Auf der motorabgewandten Seite des Antriebsstranges ist in der Regel zumindest eine Antriebsachse vorgesehen, welche mittels des Motors über den Antriebsstrang angetrieben werden kann. Mittels der Getriebeeinrichtung kann die Übersetzung zwischen der Motorausgangswelle und der Antriebsachse verändert werden. An dieser Antriebsachse sowie an Achsen des Kraftfahrzeuges, die gegebenenfalls nicht mit dem Antriebsstrang gekoppelt sind, werden Räder aufgenommen. Im Bereich dieser Räder sind bei bekannten Kraftfahrzeugen Bremsen vorgesehen, mittels welchen das Kraftfahrzeug verzögert bzw. angehalten werden kann. Solche Bremsen können beispielsweise über rein mechanische oder rein hydraulische Übertragungsstrecken oder mittels einer elektronischen Ansteuerung (brake by wire) vom Fahrer betätigt werden. Weiterhin kann bei derartigen Systemen zusätzlich oder alternativ ein automatisierter Bremsvorgang, beispielsweise zum Parken, bei zu geringem Abstand und dergleichen vorgesehen sein. Bekannt ist auch, dass zum Ansteuern der Bremsen elektronische bzw. elektronisch unterstützte Systeme eingesetzt werden, wie beispielsweise das sog. Antiblockiersystem (ABS).

Ferner weisen Kraftfahrzeuge in ihrem Antriebsstrang in der Regel eine Kupplung auf, die ein Öffnen des Antriebsstrangs bzw. eines Antriebstrangszweiges ermöglicht. Häufig ist diese Kupplung zwischen dem Motor und dem Getriebe im Antriebsstrang angeordnet. Es ist auch bekannt, dass mehrere, insbesondere zwei, solcher Kupplungen im Antriebsstrang angeordnet sind, wie beispielsweise bei Doppelkupplungsgetrieben (DKG) bzw. Parallelschaltgetrieben (PSG), Unterbrechungsfreien Schaltgetriebe (USG) oder Elektronischen Schaltgetrieben (ESG). Dabei werden die Kupplungen nicht nur zum Öffnen und Schließen des Antriebsstrangs verwendet, sondern beispielsweise auch zum zugkraftunterbrechungsfreien Schalten zwischen Gängen.

Beispielsweise zu diesem Zweck sind die Kupplungen häufig so ausgebildet, dass sie nicht nur (vollständig) geöffnet werden können, so dass über sie kein Drehmoment übertragen werden kann bzw. der Antriebsstrang oder Antriebsstrangzweig vollständig geöffnet ist, und so geschlossen werden können, dass ein anliegendes Drehmoment, wie Motordrehmoment vollständig übertragen werden kann, sondern auch in Zwischenstellungen soweit geöffnet bzw. geschlossen werden können, dass ein anliegendes Drehmoment nur beschränkt übertragen werden kann. Dabei ist in der Regel vorgesehen, dass die Kupplung schlupft, wenn das anliegende Drehmoment, das von der Kupplung übertragbare Drehmoment übersteigt. Die Möglichkeit, dass eine Kupplung nur ein beschränktes, unterhalb des anliegenden Drehmoments gelegenes Drehmoment übertragen kann, kann aber auch bei im Zusammenhang mit anders gestalteten Getrieben, und insbesondere auch im Zusammenhang mit solchen, die nicht parallel geschaltete Antriebsstrangzweige aufweisen, verwendet werden. Beispielsweise kann dies dazu verwendet werden, um eine leichtes, ruckarmes oder ruckfreies Anfahren des Kraftfahrzeuges zu ermöglichen, oder um ein elektronisch gesteuertes Ankriechen des Kraftfahrzeuges zu ermöglichen.

Bekannt ist ferner, dass die Kupplung und / oder das Getriebe elektronisch angesteuert wird. Hierzu kann beispielsweise ein elektronisches Steuergerät eingesetzt werden. Mittels eines solchen elektronischen Steuergeräts können beispielsweise Gangwechselvorgänge und korrespondierend hierzu die Kupplung gesteuert werden. Bekannt ist ferner, dass die Kupplung mittels des elektronischen Steuergeräts in Abhängigkeit von bestimmten Fahrzuständen bzw. Betriebskennwerten des Kraftfahrzeuges gesteuert wird. So kann beispielsweise eine Funktionalität implementiert sein, die so ist, dass das Fahrzeug im Stillstand bei laufender Brennkraftmaschine und nicht betätigter Bremse ankriecht, was über eine entsprechende Betätigung der Kupplung gesteuert werden kann. Bekannt ist beispielsweise auch eine Funktionalität, die so ist, dass die Kupplung automatisch öffnet, wenn das Fahrzeug angehalten wird.

Es sind auch Funktionalitäten bekannt, die so sind, dass in vorbestimmten Situationen die Kupplung geöffnet wird bzw. geöffnet gehalten werden soll.

Insbesondere bei elektronisch gesteuerten Kupplungen können diverse Fehler auftreten, wie beispielsweise ein Fehler des Kupplungssteuergeräts bzw. des Codes des Steuergeräts oder ein Hardwarefehler, durch welche bewirkt wird, dass die Kupplung bzw. die offene Kupplung ungewollt geschlossen wird. So kann beispielsweise auftreten, dass eine fälschliche Vorgabe zum Schließen der Kupplung gegeben wird bzw. ein entsprechendes Signal ausgesandt wird. Ferner kann es passieren, dass ein elektronisches Problem im Steuergerät ein Schließen der Kupplung bewirkt oder auch durch einen Kurzschluss ein ungewolltes Schließen der Kupplung bewirkt wird. Derartige Situationen können dazu führen, dass das Fahrzeug unbeabsichtigt wegrollt. Weiterhin können so genannte Schaltkupplungen und deren Synchronisationseinrichtungen im Getriebe vorgesehen sein, die fehlerhaft sein können oder fehlerhaft bedient werden können, so dass ein Fahrzeug unbeabsichtigt wegrollen oder ein unbeabsichtigtes Moment der Antriebseinheit auf die Räder übertragen werden kann. In der Auslegung einer Funktionsstörung einer Kupplung wird auch eine Funktionsstörung von Schaltkupplungen und deren Synchronisationseinrichtungen umfasst.

Der Erfindung liegt nun die Aufgabe zugrunde, eine Möglichkeit zu schaffen, mittels welcher das unbeabsichtigte Los- bzw. Wegrollen von Kraftfahrzeugen mit elektronisch gesteuerter bzw. betätigter Kupplung und/oder automatisiertem Schaltgetriebe verhindert werden kann, wenn Funktionsbeeinträchtigungen auftreten und insbesondere, wenn das Steuergerät einen Fehler detektiert, oder wenn ein kompletter Ausfall des Steuergeräts gegeben ist.

Erfindungsgemäß wird ein Verfahren gemäß Anspruch 1 vorgeschlagen. Ein erfindungsgemäßes Kraftfahrzeug ist Gegenstand des Anspruchs 10 oder des Anspruchs 11. Bevorzugte Gestaltungen sind Gegenstand der Unteransprüche.

Erfindungsgemäß wird insbesondere ein Verfahren zum Steuern der Bremseinrichtung eines Kraftfahrzeugs bzw. zum Verhindern des unbeabsichtigten Los- bzw. Wegrollens des Kraftfahrzeuges bei Auftreten vorbestimmter Fehler vorgeschlagen. Dieses Verfahren lässt sich vorteilhaft bei Kraftfahrzeugen einsetzen, die eine Bremseinrichtung aufweisen, einen von einem Motor, wie z.B. Brennkraftmaschine, belastbaren Antriebsstrang, in dem eine Kupplungseinrichtung angeordnet ist, ein elektronisches Steuergerät zum Ansteuern bzw. Betätigen dieser Kupplungseinrichtung und eine elektronisch gesteuerte Bremsüberwachungs- oder -betätigungseinrichtung zum Überwachen und/oder Betätigen der Bremseinrichtung. Eine solche elektronisch gesteuerte Bremsüberwachungs- und/oder Betätigungseinrichtung kann beispielsweise ein so genanntes Antiblockiersystem (ABS) sein oder eine elektrische Handbremse oder eine elektrische Parksperre. Ohne dass die Erfindung hierdurch beschränkt werden soll, wird im Folgenden zur Vereinfachung von einem Antiblockiersystem gesprochen, wobei anzumerken ist, dass anstelle eines solchen Antiblockiersystems anders gestaltete elektronisch gesteuerte Bremsüberwachungs- und/oder -betätigungseinrichtungen gegeben sein können. Das Steuergerät kann ein Steuergerät für eine Kupplungssteuergerät oder ein Getriebesteuergerät zur Steuerung eines automatisierten Getriebes mit einer Getriebebetätigungseinrichtung sein. Kupplungs- und Steuergerät sowie gegebenenfalls andere Steuergeräte oder Steuereinheiten können zu einem Steuergerät zusammengefasst sein. Die Betrachtung einer Funktionsbeeinträchtigung der automatisierten Kupplung und deren Wirkung umfasst ebenfalls eine Funktionsbeeinträchtigung des automatisierten Getriebes, die ein unbeabsichtigtes Wegrollen des Fahrzeuges bewirkt.

Gemäß dem erfindungsgemäßen Verfahren ist auch vorgesehen, dass überwacht wird, ob das Kupplungssteuergerät funktionsbeeinträchtigt, insbesondere ausgefallen, ist und/oder überwacht wird, ob vom Kupplungssteuergerät eine vorbestimmte Funktionsbeeinträchtigung detektiert bzw. erfasst wurde. Letzteres kann auch so sein, dass überwacht wird, ob dem elektronischen Steuergerät eine Funktionsbeeinträchtigung mitgeteilt wird.

Eine solche Funktionsbeeinträchtigung des Kupplungssteuergeräts kann beispielsweise ein Softwarefehler des Kupplungssteuergeräts oder ein - insbesondere kompletter -Ausfall des Kupplungssteuergeräts sein. Anzumerken ist allerdings, dass die Funktionsbeeinträchtigung des Kupplungssteuergeräts bevorzugt zu unterscheiden ist von einer Funktionsbeeinträchtigung, die das Kupplungssteuergerät detektiert bzw. detektieren kann. Solche vom Kupplungssteuergerät detektierte bzw. überwachte bzw. detektierbare Funktionsbeeinträchtigungen können beispielsweise Fehler im Ausrücksystem bzw. Aktor der Kupplung, wie beispielsweise ein Bruch einer - sofern gegeben - hydraulischen Leitung des Ausrücksystems oder ein Bruch eines mechanischen Bauteils des Ausrücksystems der Kupplungseinrichtung sein. Sofern im Ausrücksystem Ventile gegeben sind, kann beispielsweise auch eine Fehlfunktion eines Ventils eine derartige Funktionsbeeinträchtigung sein. Ferner kann beispielsweise ein Kurzschluss eine derartige Funktionsbeeinträchtigung sein.

Derartige Funktionsbeeinträchtigungen des Kupplungssteuergeräts bzw. derartige Funktionsbeeinträchtigungen, die vom Steuergerät überwacht bzw. detektiert bzw. erfasst werden, sind insbesondere solche, die ein ungewolltes Schließen der Kupplung bewirken können.

Die Überwachung, ob eine vorbestimmte Funktionsbeeinträchtigung des Kupplungssteuergeräts, wie beispielsweise Ausfall, gegeben ist, kann beispielsweise vom bzw. mittels des Antiblockiersystems oder mittels eines vom Kupplungssteuergerät verschiedenen, zweiten Steuergeräts durchgeführt werden, sofern ein solches zweites Steuergerät vorhanden ist. Ein solches zweites Steuergerät kann beispielsweise ein Motorsteuergerät sein. Die Überwachung, ob vom Kupplungssteuergerät eine Funktionsbeeinträchtigung detektiert wurde, kann beispielsweise mittels des Kupplungssteuergeräts selbst oder mittels eines bereits angesprochenen zweiten Steuergeräts oder mittels des Antiblockiersystems durchgeführt werden.

Zur Vereinfachung wird im Folgenden auch von "Funktionsbeeinträchtigung" gesprochen, wobei damit insbesondere gemeint ist, dass dies eine Funktionsbeeinträchtigung des Kupplungssteuergeräts, wie beispielsweise ein Ausfall des Kupplungssteuergeräts, sein kann, und/oder eine Funktionsbeeinträchtigung, die vom Kupplungssteuergerät detektiert wurde bzw. überwacht wurde.

Gemäß dem erfindungsgemäßen Verfahren ist insbesondere vorgesehen, dass dann, wenn eine Funktionsbeeinträchtigung im Rahmen dieser Überwachung detektiert wurde, das Antiblockiersystem bewirkt, dass - insbesondere mittels dieses Antiblockiersystems - die Bremseinrichtung betätigt wird.

Das Betätigen der Bremseinrichtung ist im Sinne der Erfindung insbesondere ein Schließen bzw. zumindest teilweises Schließen der Bremseinrichtung.

Es kann vorgesehen sein, dass das elektronische Kupplungssteuergerät in dem Fall, dass es eine vorbestimmte Funktionsbeeinträchtigung, wie beispielsweise Funktionsbeeinträchtigung des Kupplungsbestätigungssystems, erkannt oder ermittelt hat, ein elektronisches Signal an das Antiblockiersystem sendet, welches bewirkt, dass mittels des Antiblockiersystems die Bremseinrichtung betätigt wird.

Es kann aber auch vorgesehen sein, dass ein bereits angesprochenes zweites elektronisches Steuergerät, wie Motorsteuergerät, vorgesehen ist, wobei dieses zweite elektronische Steuergerät überwacht, ob eine vorbestimmte Funktionsbeeinträchtigung vom elektronischen Kupplungssteuergerät detektiert oder erkannt wurde. In diesem Fall kann vorgesehen sein, dass dieses zweite elektronische Steuergerät dann, wenn es feststellt, dass das Kupplungssteuergerät eine Funktionsbeeinträchtigung detektiert oder erkannt hat, ein Signal an das Antiblockiersystem sendet, welches dann bewirkt, dass das Antiblockiersystem die Bremseinrichtung betätigt, also insbesondere schließt.

Es ist aber auch möglich, dass das Antiblockiersystem selbst überwacht, ob das elektronische Steuergerät eine Funktionsbeeinträchtigung, insbesondere Funktionsbeeinträchtigung des Ausrücksystems der Kupplung, detektiert hat, und dann, wenn es festgestellt hat, dass eine solche Funktionsbeeinträchtigung vom elektronischen Steuergerät detektiert wurde, bewirkt, dass die Bremseinrichtung betätigt, insbesondere geschlossen wird.

Vorzugsweise ist vorgesehen, das dann, wenn das Steuergerät bzw. Kupplungssteuergerät einen Fehler detektiert hat, eine Information von der Kupplungssteuerung an das Antiblockiersystem übergeben wird, die dazu führt, dass vom Antiblockiersystem die Bremsen betätigt werden.

Gemäß einer bevorzugten Gestaltung ist vorgesehen, dass ein zweites Steuergerät, das vom elektronischen Kupplungssteuergerät verschieden ist, überwacht, ob das elektronische Steuergerät funktionsbeeinträchtigt ist. Eine solche Funktionsbeeinträchtigung kann beispielsweise ein Ausfall des elektronischen Steuergeräts sein. Dabei ist insbesondere vorgesehen, dass dieses zweite elektronische Steuergerät im Falle einer festgestellten Funktionsbeeinträchtigung des elektronischen Kupplungssteuergeräts ein Signal an das Antiblockiersystem sendet. Durch dieses Signal wird dann bewirkt bzw. initiiert, dass die Bremseinrichtung betätigt bzw. geschlossen wird. Das zweite Steuergerät kann beispielsweise ein Motorsteuergerät sein.

Bevorzugt ist auch, dass bei detektiertem Ausfall des Kupplungssteuergeräts das Antiblockiersystem selbständig die Bremsen betätigt. Es kann also insbesondere vorgesehen sein, dass das Antiblockiersystem überprüft, ob das Kupplungssteuergerät funktionsbeeinträchtigt bzw. ausgefallen ist. Hierdurch wird insbesondere ermöglicht, dass unerwünschte Auswirkungen eines möglichen Fehlverhaltens des Kupplungsbetätigungssystems unterbunden werden.

Bevorzugt ist auch, dass dann, wenn dem Antiblockiersystem angezeigt wird, dass es die Bremseinrichtung schließen soll bzw. wenn das Antiblockiersystem selbst die entsprechende Information gewinnt, das Schließen der Bremsen in Abhängigkeit der Fahrzeuggeschwindigkeit erfolgt. Dies kann beispielsweise so sein, dass die bewirkte Bremskraft bzw. das bewirkte Bremsmoment in Abhängigkeit der Fahrzeuggeschwindigkeit bewirkt wird. Dies kann aber beispielsweise auch so sein, dass das Schließen bzw. Betätigen der Bremseinrichtung nur dann bewirkt wird, wenn die aktuelle Geschwindigkeit des Fahrzeuges unterhalb einer vorbestimmten Geschwindigkeitsschwelle liegt.

Wenn das Antiblockiersystem die zwei genannten Strategien, also das Schließen der Bremseinrichtung im Falle einer Funktionsbeeinträchtigung des Kupplungssteuergeräts bzw. im Falle einer Funktionsbeeinträchtigung, die vom Kupplungssteuergerät detektiert bzw. erfasst wurde, nur dann durchführt, wenn die Geschwindigkeit des Fahrzeugs unter einer als sicher geltenden Schwelle liegt, können sicherheitskritische Situationen ausgeschlossen bzw. zumindest reduziert werden. Eine solche Gestaltung ist besonders bevorzugt.

Es ist insbesondere vorgesehen, dass dem Antiblockiersystem die Fahrzeuggeschwindigkeit in Normalsituationen und insbesondere im Stillstand des Fahrzeuges bekannt sind, bzw. dass das Antiblockiersystem die Fahrzeuggeschwindigkeit abfragt oder dem ABS die Fahrzeuggeschwindigkeit mitgeteilt wird. Hierdurch wird auch ermöglicht, dass eine geschwindigkeitsabhängige Betätigung der Bremse, und insbesondere die Betätigung der Bremse nur dann, wenn die Fahrzeuggeschwindigkeit unter der angesprochenen Schwelle liegt, in den genannten Situationen erfolgen kann. Es sei nochmals angemerkt, dass alternativ zum Antiblockiersystem jede elektronisch gesteuerte Einrichtung zum Überwachen und Betätigen der Bremsen zum Sichern des Fahrzeugs gegen Wegrollen verwendet werden kann, wie beispielsweise eine elektrische Handbremse oder Parksperre.

Bevorzugt wird ein ABS-Eingriff zum Schutz vor unbeabsichtigtem Losrollen durch die Kupplungssteuerung ausgelöst. Es kann auch, wenn vorhanden, eine Parksperre eingelegt werden. Die Kupplung bzw. Kupplungseinrichtung ist insbesondere eine elektronisch betätigte Kupplung. Ein automatisiertes Schaltgetriebe ist bevorzugt ein elektronisch mittels Aktoren betätigtes Getriebe, wobei die Aktoren entsprechende Schalteinrichtungen, beispielsweise Schaltstangen oder -schienen mit Schaltmuffen, betätigen.

Alternative Strategien, wie z.B. Motoreingriff, sind in der Reaktionszeit in aller Regel langsamer. Außerdem ist bei einem stehenden Fahrzeug mit meist im Leerlauf drehendem Motor eine kinetische Energie vorhanden. Diese wird beim Schließen der Kupplung das Fahrzeugs in jedem Fall - zumindest aber in aller Regel - in Bewegung setzen. Dies kann insbesondere verhindert werden, wenn die Bremsen vom Antiblockiersystem bzw. in entsprechender Weise betätigt werden.

Darüber hinaus kann der Fall abgesichert werden, dass das Fahrzeug durch eine Fehlfunktion mit offener Kupplung abgestellt wird, obwohl die Situation ein Schließen der Kupplung erfordert, um das Fahrzeug am Wegrollen zu hindern. Eine solche Gestaltung ist besonders bevorzugt. Auch in diesem Fall könnte ein Wegrollen verhindert werden durch Betätigen einer elektrischen Bremse oder Parksperre.

Durch die Erfindung bzw. bevorzugte Weiterbildung der Erfindung kann, insbesondere indem die Bremsen (z.B. ABS) selbständig schließen, verhindert bzw. die Wahrscheinlichkeit vermindert werden, dass bei Auftreten eines Fehlers im Kupplungssteuergerät das Fahrzeug unbeabsichtigt wegrollt.

Besonders bevorzugt ist ferner, dass die Kupplung als so genannte "Clutch by Wire"-Kupplung ausgebildet ist.

Erfindungsgemäß wird ferner insbesondere ein Kraftfahrzeug mit einer Bremseinrichtung vorgeschlagen und mit einer elektronisch gesteuerten Bremsüberwachungs- und -betätigungseinrichtung, wie beispielsweise Antiblockiersystem oder elektrische Handbremse oder Parksperre. Aus bereits oben genannten Gründen wird im Folgenden von Antiblockiersystem gesprochen. Das Kraftfahrzeug weist ferner einen Motor, wie beispielsweise Brennkraftmaschine, auf, sowie einen von diesem Motor belastbaren Antriebsstrang, in dem eine Kupplungseinrichtung vorgesehen ist. Zum Ansteuern dieser Kupplungseinrichtung ist eine separate oder mit einer weiteren Steuereinheit des Kraftfahrzeuges in einer Baueinheit vereinigte Steuereinheit, beispielsweise ein elektronisches Kupplungssteuergerät vorgesehen, das eine Signalerzeugungseinrichtung aufweist. Das Antiblockiersystem bzw. die elektronisch gesteuerte Bremsüberwachungs- und/oder -betätigungseinrichtung weist eine Signalempfangseinrichtung auf. Das Kupplungssteuergerät ist mit diesem Antiblockiersystem derart signalverbunden, dass durch Aussenden eines vorbestimmten Signals des elektronischen Steuergeräts an das Antiblockiersystem bewirkt wird bzw. initiiert wird, dass das Antiblockiersystem ein Betätigen der Bremseinrichtung bewirkt bzw. unter vorbestimmten Gegebenheiten bewirkt.

Gemäß einem weiteren Gedanken der Erfindung wird ein Kraftfahrzeug mit einer Bremseinrichtung vorgeschlagen. Gemäß diesem Gedanken weist das Kraftfahrzeug ferner eine Bremsüberwachungs- und/der -betätigungseinrichtung auf, die beispielsweise in oben genannter Art ausgebildet sein kann und im Folgenden als Antiblockiersystem bezeichnet wird. Das Kraftfahrzeug weist ferner einen Motor, wie Brennkraftmaschine, auf, und einen von diesem Motor belastbaren Antriebsstrang. In dem Antriebsstrang ist eine Kupplungseinrichtung vorgesehen. Zum Ansteuern dieser Kupplungseinrichtung ist ein elektronisches Kupplungssteuergerät vorgesehen. Das Antiblockiersystem weist eine Signalempfangseinrichtung auf und ist mit dem elektronischen Kupplungssteuergerät derart signalverbunden, dass dann, wenn das elektronische Kupplungssteuergerät eine vorbestimmte Funktionsbeeinträchtigung detektiert hat und/oder dann, wenn das elektronische Kupplungssteuergerät funktionsbeeinträchtigt ist, mittels eines von dieser Funktionsbeeinträchtigung, die vom elektronischen Kupplungssteuergerät erfasst bzw. detektiert wurde bzw. mittels eines von der Funktionsbeeinträchtigung des elektronischen Kupplungssteuergeräts abhängigen Signals dem Antiblockiersystem anzeigbar ist, dass dieses Antiblockiersystem ein Schließen der Bremseinrichtung bewirken soll.

Es sei in diesem Zusammenhang angemerkt, dass die Signalverbindung zwischen dem Antiblockiersystem und dem Kupplungssteuergerät eine direkte Signalverbindung sein kann. Es kann aber auch vorgesehen sein, dass die Signalverbindung so ist, dass sie "quasi" indirekt ist. Das kann beispielsweise so sein, dass ein zweites Steuergerät, wie beispielsweise Motorsteuergerät, mit dem Kupplungssteuergerät signalverbunden ist und dieses überwacht bzw. überwacht, ob das Kupplungssteuergerät eine Funktionsbeeinträchtigung detektiert oder abgespeichert hat. Dann kann in dem Fall, dass das Motorsteuergerät bzw. das zweite Steuergerät eine derartige Funktionsbeeinträchtigung feststellt bzw. erkennt, das zweite Steuergerät ein Signal an das Antiblockiersystem senden.

Es kann aber auch eine direkte Verbindung vorgesehen sein. Diese kann beispielsweise so sein, dass eine direkte Signalverbindung zwischen dem Antiblockiersystem und dem Kupplungssteuergerät gegeben ist und das Kupplungsteuergerät ein Signal aussendet, wenn es festgestellt hat, dass eine Funktionsbeeinträchtigung gegeben ist, wobei dieses Signal von dem Antiblockiersystem erfasst wird und bewirkt, dass die Bremseinrichtung betätigt wird. Es kann vorgesehen sein, dass das Antiblockiersystem dabei überwacht, ob das Kupplungssteuergerät funktionsbeeinträchtigt ist und im Falle einer solchen Funktionsbeeinträchtigung ebenfalls ein Schließen der Bremseinrichtung bewirkt.

In erfindungsgemäßen Gestaltungen kann die elektronische gesteuerte bzw. betätigte Kupplung insbesondere als Reibungskupplung ausgebildet sein.

Es kann auch vorgesehen sein, dass im Antriebsstrang eine Getriebeeinrichtung angeordnet ist, der gegebenenfalls auch die Kupplung bzw. die Kupplungen zugeordnet sind. Ein solches Getriebe kann beispielsweise ein Automatisiertes Schaltgetriebe (ASG) oder ein Doppelkupplungsgetriebe (DKG) bzw. Parallelschaltgetriebe (PSG) oder ein Unterbrechungsfreies Schaltgetriebe (USG) oder ein Elektronisches Schaltgetriebe (ESG) oder ein stufenloses Getriebe (CVT) sein.

Es kann auch vorgesehen sein, dass die Information, dass die Bremseinrichtung geschlossen werden soll, in ein CAN-Bus-System eingespeist und von einem zweiten Steuergerät oder von dem Antiblockiersystem aus diesem entnommen wird.

Im Folgenden soll nun die Erfindung anhand der Figuren beispielhaft erläutert werden. Dabei zeigt:

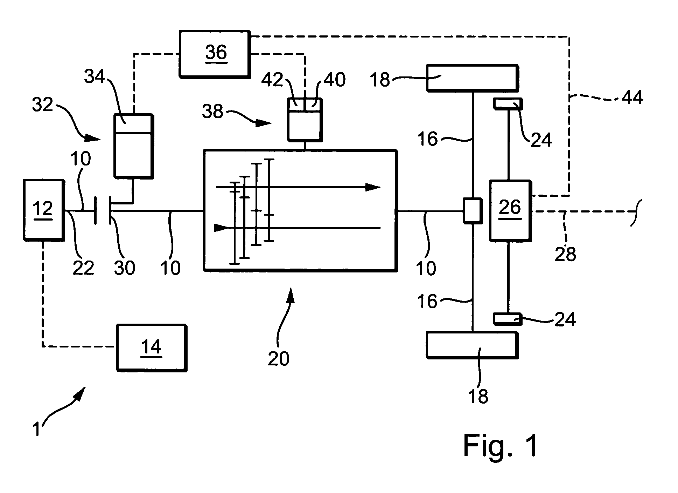

Fig. 1 ein beispielhaftes erfindungsgemäßes Kraftfahrzeug in schematischer teilweiser, Darstellung, wobei anhand der Fig. 1 auch beispielhafte erfindungsgemäße Gestaltungen des erfindungsgemäßen Verfahrens erläutert werden.

Das teilweise und schematisch in Fig. 1 dargestellte Kraftfahrzeug 1 weist einen Antriebsstrang 10 auf, der von einem als Brennkraftmaschine 12 gestalteten Motor antreibbar ist. Diese Brennkraftmaschine 12 wird von einem elektronischen Motorsteuergerät 14 angesteuert.

Auf der der Brennkraftmaschine 12 abgewandten Seite des Antriebsstranges 10 weist dieser eine oder mehrere Antriebsachsen 16 auf. An dieser Antriebsachse 16 sind Räder 18 angeordnet.

Im Antriebsstrang ist eine Getriebeeinrichtung 20 angeordnet, mittels welcher die Übersetzung zwischen der Motorausgangswelle 22 und der Antriebsachse 16 verändert werden kann. Diese Getriebeeinrichtung 20 kann beispielsweise eine Automatisiertes Schaltgetriebe (ASG) oder ein Doppelkupplungsgetriebe (DKG) bzw. Parallelschaltgetriebe (PSG) oder ein Unterbrechungsfreies Schaltgetriebe (USG) oder ein Elektronisches Schaltgetriebe (ESG) oder ein stufenloses Getriebe (CVT) sein.

Ferner ist eine Bremseinrichtung 24 vorgesehen, mittels welcher das Kraftfahrzeug 1 verzögert bzw. abgebremst werden kann.

Zum Betätigen und / oder Überwachen der Bremseinrichtung ist eine elektronisch gesteuerte Bremsüberwachungs- und / oder -betätigungseinrichtung vorgesehen, die hier ein Antiblockiersystem 26 ist. Durch die gestrichelte Linie 28 ist schematisch angedeutet, dass das Antiblockiersystem elektronisch angesteuert werden kann bzw. elektronisch angesteuert wird.

Im Antriebstrang 10 ist ferner eine als Kupplung 30 gestaltete Drehmomentübertragungseinrichtung vorgesehen. Diese Kupplung 30 ist insbesondere eine Anfahrkupplung und kann beispielsweise als Reibungskupplung gestaltet sein. Für die Betätigung der Kupplung 30 ist ein Kupplungsaktor 32 vorgesehen, der einen Elektromotor 34 aufweist. Die Kupplung 30 und der Kupplungsaktor 32 bilden hier eine Kupplungseinrichtung. Durch - insbesondere vollständiges - Öffnen der Kupplung 30 kann der Antriebstrang geöffnet werden.

Anzumerken ist, dass in dem Fall, dass die Getriebeeinrichtung als Doppelkupplungsgetriebe (DKG) bzw. Parallelschaltgetriebe (PSG) bzw. Unterbrechungsfreies Schaltgetriebe (USG) bzw. Elektronisches Schaltgetriebe (ESG) gestaltet ist, insbesondere vorgesehen ist, dass für jedes Teilgetriebe jeweils eine Kupplung vorgesehen ist, wobei durch - insbesondere vollständiges - Öffnen einer jeden dieser Kupplungen ein jeweiliger Antriebsstrangzweig und sämtlicher dieser Kupplungen der Antriebsstrang geöffnet werden kann. Dabei kann vorgesehen sein, dass für jede dieser Kupplungen ein separater Kupplungsaktor mit separatem Elektromotor vorgesehen ist.

Zum (elektronischen) Ansteuern des Kupplungsaktors 32 bzw. des Elektromotors 34 ist ein elektronisches Kupplungssteuergerät 36 vorgesehen. Es kann vorgesehen sein, dass das elektronische Kupplungssteuergerät 36 auch die Getriebeeinrichtung 20 (elektronisch) ansteuern kann, bzw. einen oder mehrere Getriebeaktoren, die hier unter dem Bezugszeichen 38 schematisch zusammengefasst sind. Vor diesem Hintergrund könnte das Kupplungssteuergerät 36 auch als Getriebesteuergerät bezeichnet werden bzw. als elektronisches Kupplungs- und / oder Getriebesteuergerät. Es kann insbesondere vorgesehen sein, dass der bzw. ein solcher Getriebeaktor 38 einen Elektromotor 40 für das Erzeugen von Wählbewegungen aufweist, der auch als Wählmotor bezeichnet wird, sowie einen Elektromotor 42 für das Erzeugen von Schaltbewegungen, der auch als Schaltmotor bezeichnet wird.

Wie bereits angesprochen steuert das Kupplungssteuergerät 36 den Kupplungsaktor 32. Zusätzlich überwacht das Kupplungssteuergerät 36 die Funktionsfähigkeit des Kupplungsaktors 32. Hierzu kann auch vorgesehen sein, dass das Kupplungssteuergerät 36 Betriebskennwerte des Kraftfahrzeuges, wie beispielsweise Geschwindigkeit des Kraftfahrzeuges, Motordrehzahl, aktuell ein gelegter Gang im Getriebe, mitgeteilt bekommt bzw. abfragt und unter Verwendung solcher Betriebskennwerte die Funktionsfähigkeit des Kupplungsaktors 32 überwacht. Wenn das elektronische Kupplungssteuergerät 36 bei dieser Überwachung einen Fehler, wie z.B. Hardwarefehler, feststellt bzw. ermittelt, wird ein Fehlereintrag in einem Fehlerspeicher des elektronischen Kupplungssteuergeräts 36 gesetzt. Dabei kann vorgesehen sein, dass der Fehlereintrag so gesetzt wird, dass anhand des Eintrags und / oder der Speicheradresse oder auf sonstige Weise die Art des Fehlers genauer charakterisiert wird. Es kann aber auch vorgesehen sein, dass zwischen den Fehlern nicht genauer unterschieden wird bzw. zwischen Fehlern, die die Gefahr in sich bergen, dass die Kupplung ungewollt geschlossen wird, nicht genauer unterschieden wird.

Das Kupplungssteuergerät 36 ist mit dem Antiblockiersystem 26 signalverbunden, was durch die gestrichelte Linie 44 schematisch angedeutet ist. Diese Signalverbindung 44 ist derart, dass das elektronische Kupplungssteuergerät 36 ein vorbestimmtes Signal an das Antiblockiersystem 26 sendet, wenn es einen Fehler bzw. eine Funktionsbeeinträchtigung detektiert oder erfasst hat, und zwar insbesondere eine Funktionsbeeinträchtigung die ein unbeabsichtigtes Schließen der Kupplung auslösen könnte. Alternativ kann allerdings auch vorgesehen sein, dass das Antiblockiersystem 26 mittels entsprechender Signale beim elektronische Kupplungssteuergerät 36 abfragt, ob eine derartige Funktionsbeeinträchtigung bzw. Fehler gegeben ist, bzw. ob im elektronische Kupplungssteuergerät 36 ein entsprechender Fehlereintrag gesetzt ist.

Das Antiblockiersystem 26 überwacht ferner - insbesondere mittels Signalen - die Funktionsfähigkeit des elektronischen Kupplungssteuergerät 36, und zwar insbesondere, ob dieses ausgefallen ist. Ferner kann vorgesehen sein, dass überwacht wird, ob ein Fehler im Code des Kupplungssteuergeräts 36 gegeben ist.

Sofern eine Funktionsbeeinträchtigung, die vom elektronischen Kupplungssteuergerät 36 ermittelt bzw. erfasst wurde oder eine Funktionsbeeinträchtigung des elektronischen Kupplungssteuergeräts 36 dem Antiblockiersystem 26 bekannt wird, bewirkt dieses das die Bremsen 24 geschlossen werden. Es kann vorgesehen sein, dass dieses "Bekannt werden" ein unmittelbares, als auf einen Fehler direkt hinweisendes, "Bekannt werden" ist oder ein indirektes. Letzteres kann beispielsweise so sein, dass im Falle der vom des elektronischen Kupplungssteuergeräts 36 ermittelten bzw. erfassten Funktionsbeeinträchtigung dieses elektronischen Kupplungssteuergeräts 36 einen Befehl an das Antiblockiersystem 26 sendet, nach dem die Bremsen geschlossen, werden sollen, ohne dass die Information beinhaltet ist, dass dies aufgrund einer Funktionsbeeinträchtigung erfolgen soll, ohne dass die Funktionsbeeinträchtigung genauer charakterisiert oder identifiziert ist.

### Bezugszeichenliste

- 1: Kraftfahrzeug
- 10: Antriebsstrang
- 12: Brennkraftmaschine
- 14: Motorsteuergerät
- 16: Antriebsachse
- 18: Rad
- 20: Getriebeeinrichtung
- 22: Motorausgangswelle
- 24: Bremseinrichtung
- 26: Antiblockiersystem
- 28: gestrichelte Linie
- 30: Kupplung
- 32: Kupplungsaktor
- 34: Elektromotor von 32
- 36: elektronisches Kupplungssteuergerät
- 38: Getriebeaktor
- 40: Wählmotor
- 42: Schaltmotor
- 44: gestrichelte Linie

## Patentansprüche

1. Verfahren zum Steuern einer Bremseinrichtung eines Kraftfahrzeuges, welches Kraftfahrzeug aufweist:
- eine Bremseinrichtung;
- einen von einem Motor (12) belastbaren Antriebsstrang (10) mit einer Einrichtung zum Trennen des Motors (12) vom übrigen Antriebsstrang wie Kupplungseinrichtung (30, 32),
- ein elektronisches Ssteuergerät (36) zum Ansteuern der Einrichtung (30, 32); und
- eine elektronisch gesteuerte Bremsüberwachungs- und / oder -betätigungseinrichtung zum Überwachen und / oder Betätigen der Bremseinrichtung;
wobei überwacht wird, ob vorbestimmte Funktionsbeeinträchtigungen des Steuergeräts (36) gegeben sind und / oder vom Steuergerät (36) detektiert bzw. erfasst wurden, wobei dann, wenn festgestellt wird, dass eine Funktionsbeeinträchtigung des Ssteuergeräts (36) gegeben ist und / oder wenn festgestellt wird, dass eine Funktionsbeeinträchtigung vom Kteuergerät (36) detektiert bzw. erfasst wurde, die elektronisch gesteuerte Bremsüberwachungs- und / oder -betätigungseinrichtung (26) bewirkt, dass die Bremseinrichtung (24) betätigt wird.

2. Verfahren nach Anspruch 1, **dadurch gekennzeichnet, dass** die Funktionsbeeinträchtigungen des Kupplungssteuergeräts (36) und / oder die vorbestimmten Funktionsbeeinträchtigungen, die vom Kupplungssteuergerät (36) detektierbar bzw. erfassbar sind, solche sind, die, gegebenenfalls im Zusammenwirken mit vorbestimmten Steuerungsfunktionalitäten, ein ungewolltes Schließen der Kupplung (30) bewirken können.

3. Verfahren nach einem der vorangehenden Ansprüchen, **dadurch gekennzeichnet, dass** dann, wenn das elektronische Kupplungssteuergerät (36) eine vorbestimmte Funktionsbeeinträchtigung detektiert bzw. erfasst hat, dieses elektronische Kupplungssteuergerät (36) ein Signal an die elektronisch gesteuerte Bremsüberwachungs- und / oder - betätigungseinrichtung (26) sendet, welches bewirkt, dass mittels der elektronisch gesteuerten Bremsüberwachungs- und / oder -betätigungseinrichtung (26) die Bremseinrichtung (24) betätigt wird.

4. Verfahren nach einem der Ansprüche 1 und 2, **dadurch gekennzeichnet, dass** ein zweites, vom elektronischen Kupplungssteuergerät (36) verschiedenes, elektronisches Steuergerät, wie Motorsteuergerät (14), überwacht, ob das elektronische Kupplungssteuergerät (36) eine vorbestimmte Funktionsbeeinträchtigung detektiert bzw. erfasst hat, wobei dieses zweite elektronische Steuergerät (14) dann, wenn es festgestellt hat, dass das elektronische Kupplungssteuergerät (36) eine vorbestimmte Funktionsbeeinträchtigung detektiert bzw. erfasst hat, ein Signal an die elektronisch gesteuerte Bremsüberwachungs- und / oder -betätigungseinrichtung (26) sendet, welches bewirkt, dass mittels der elektronisch gesteuerten Bremsüberwachungs- und / oder - betätigungseinrichtung (26) die Bremseinrichtung (24) betätigt wird.

5. Verfahren nach einem der Ansprüche 1 und 2, **dadurch gekennzeichnet, dass** die Bremsüberwachungs- und / oder -betätigungseinrichtung (26) überwacht, ob das elektronische Kupplungssteuergerät (36) eine vorbestimmte Funktionsbeeinträchtigung detektiert bzw. erfasst hat, wobei diese Bremsüberwachungs- und / oder -betätigungseinrichtung (26) dann, wenn sie festgestellt hat, dass das elektronische Kupplungssteuergerät (36) eine vorbestimmte Funktionsbeeinträchtigung detektiert bzw. erfasst hat, bewirkt, dass mittels der elektronisch gesteuerten Bremsüberwachungs- und / oder - betätigungseinrichtung (26) die Bremseinrichtung (24) betätigt wird.

6. Verfahren nach einem der vorangehenden Ansprüche, **dadurch gekennzeichnet, dass** ein zweites, vom elektronischen Kupplungsteuergerät (36) verschiedenes, elektronisches Steuergerät, wie Motorsteuergerät (14), überwacht, ob das elektronische Kupplungssteuergerät (36) funktionsbeeinträchtigt, insbesondere ausgefallen, ist, wobei dieses zweite elektronische Steuergerät (14) dann, wenn es festgestellt hat, dass das elektronische Kupplungssteuergerät (36) funktionsbeeinträchtigt, insbesondere ausgefallen, ist, ein Signal an die elektronisch gesteuerte Bremsüberwachungs- und / oder -betätigungseinrichtung (26) sendet, welches bewirkt, dass mittels der elektronisch gesteuerten Bremsüberwachungs- und / oder -betätigungseinrichtung (26) die Bremseinrichtung (24) betätigt wird.

7. Verfahren nach einem der vorangehenden Ansprüche, **dadurch gekennzeichnet, dass** die elektronisch gesteuerte Bremsüberwachungs- und / oder -betätigungseinrichtung (26) überwacht, ob das elektronische Kupplungssteuergerät (36) funktionsbeeinträchtigt, insbesondere ausgefallen, ist, wobei diese elektronisch gesteuerte Bremsüberwachungs- und / oder -betätigungseinrichtung (26) dann, wenn sie festgestellt hat, dass das elektronische Kupplungssteuergerät (36) funktionsbeeinträchtigt, insbesondere ausgefallen, ist, bewirkt, dass die Bremseinrichtung (24) betätigt wird.

8. Verfahren nach einem der vorangehenden Ansprüche, **dadurch gekennzeichnet, dass** die elektronisch gesteuerte Bremsüberwachungs- und / oder -betätigungseinrichtung (26) dieses Betätigen bzw. Schließen der Bremseinrichtung (24) aufgrund einer solchen, vom elektronischen Kupplungssteuergerät (36) detektierten Funktionsbeeinträchtigung und / oder aufgrund einer solchen Funktionsbeeinträchtigung des Kupplungssteuergeräts (36) in Abhängigkeit der Geschwindigkeit des Kraftfahrzeuges (1) bewirkt.

9. Verfahren nach einem der vorangehenden Ansprüche, **dadurch gekennzeichnet, dass** die elektronisch gesteuerte Bremsüberwachungs- und / oder -betätigungseinrichtung (26) dieses Schließen der Bremseinrichtung (24) aufgrund einer solchen, vom elektronischen Kupplungssteuergerät (36) detektierten Funktionsbeeinträchtigung und / oder aufgrund einer solchen Funktionsbeeinträchtigung des Kupplungssteuergeräts (36) nur dann bewirkt, wenn die aktuelle Geschwindigkeit des Kraftfahrzeuges (1) unterhalb einer vorbestimmten Geschwindigkeitsschwelle liegt.

10. Kraftfahrzeug mit einer Bremseinrichtung (24) und mit einer elektronisch gesteuerten Bremsüberwachungs- und / oder -betätigungseinrichtung (26) zum Überwachen und /oder -betätigen der Bremseinrichtung (24) und mit einem Motor (12), wie Brennkraftmaschine, sowie mit einem von diesem Motor (12) belastbaren Antriebsstrang (10), in dem eine Kupplungseinrichtung (30, 32) vorgesehen ist, wobei zum Ansteuern dieser Kupplungseinrichtung (30, 32) ein elektronisches Kupplungssteuergerät (36) vorgesehen ist, **dadurch gekennzeichnet, dass** dieses Kupplungssteuergerät (36) eine Signalerzeugungseinrichtung aufweist und diese elektronisch gesteuerte Bremsüberwachungs- und / oder -betätigungseinrichtung (26) eine Signalempfangseinrichtung aufweist und ferner dieses Kupplungssteuergerät (36) und diese elektronisch gesteuerte Bremsüberwachungs- und / oder -betätigungseinrichtung (26) derart signalverbunden sind, dass durch Aussenden eines vorbestimmten Signals des elektronischen Kupplungssteuergeräts (36) an die elektronisch gesteuerte Bremsüberwachungs- und / oder - betätigungseinrichtung (26) bewirkt wird, dass diese elektronisch gesteuerte Bremsüberwachungs- und / oder -betätigungseinrichtung (26) ein Betätigen der Bremseinrichtung (24) bewirkt.

11. Kraftfahrzeug mit einer Bremseinrichtung und mit einer elektronisch gesteuerten Bremsüberwachungs- und / oder -betätigungseinrichtung (26) zum Überwachen und / oder Betätigen der Bremseinrichtung (24) und mit einem Motor (12), wie Brennkraftmaschine, sowie mit einem von diesem Motor (12) belastbaren Antriebsstrang (10), in dem eine Kupplungseinrichtung (30, 32) vorgesehen ist, wobei zum Ansteuern dieser Kupplungseinrichtung (30, 32) ein elektronisches Kupplungssteuergerät (36) vorgesehen ist, **dadurch gekennzeichnet, dass** diese elektronisch gesteuerte Bremsüberwachungs- und /oder -betätigungseinrichtung (26) eine Signalempfangseinrichtung aufweist und diese elektronisch gesteuerte Bremsüberwachungs- und / oder -betätigungseinrichtung (26) mit diesem elektronischen Kupplungssteuergerät (36) derart signalverbunden ist, dass dann, wenn das elektronische Kupplungssteuergerät (36) eine vorbestimmte Funktionsbeeinträchtigung detektiert bzw. erfasst hat, und / oder dann, wenn das elektronische Kupplungsteuergerät (36) funktionsbeeinträchtigt ist, mittels eines vom dieser vorbestimmten Funktionsbeeinträchtigung bzw. Funktionsbeeinträchtigung des Kupplungssteuergeräts abhängigen Signals der elektronisch gesteuerte Bremsüberwachungs- und / oder -betätigungseinrichtung (26) anzeigbar ist, dass sie ein Schließen der Bremseinrichtung (24) bewirken soll.

12. Kraftfahrzeug nach einem der Ansprüche 11 und 12, **dadurch gekennzeichnet, dass** die elektronisch gesteuerte Bremsüberwachungs- und / oder -betätigungseinrichtung (26) ein Antiblockiersystem (ABS) oder eine elektrische Handbremse oder eine elektrische Parksperre ist.
